# EUROPEAN PATENT APPLICATION

(11) **EP 2 529 648 A1**
(43) Date of publication of application: **05.12.2012**
(21) Application number: 12166100.3
(22) Date of filing: 01.10.2009
(51) Int. Cl.: A47J 31/44, A47J 31/52

(54) **User-friendly interface for a beverage machine**

(30) Priority: 03.10.2008 EP 08105491
(62) Divisional of application: 09783631.6
(71) Applicant: Nestec S.A., 1800 Vevey (CH)
(72) Inventor: Cahen, Antoine, 1005 Lausanne (CH); Möri, Peter, 3272 WALPERSWIL (CH)

(57) **Abstract**

A machine (1) for preparing a liquid food or beverage, having an outermost housing (15) with a face (12) bearing a user-interface (11) that comprises a selector wheel (31) which is user-rotatable for selecting at least one value for a parameter of a process to be carried out by such machine (1), wherein the selector wheel (31) has a generally circular peripheral portion that is rotatable through the housing face (12), the selector wheel (31) having an axis of rotation that is optionally located inside the housing (15), the selector wheel (31) being in particular generally perpendicular to the housing face (12).

## Description

### Field of the Invention

The field of the invention pertains to liquid food or beverage preparation machines having a user-friendly user-interface.

### Background Art

Certain beverage or food preparation machines use capsules containing ingredients to be extracted or to be dissolved; for other machines, the ingredients are stored and dosed automatically in the machine or else are added at the time of preparation of the drink.

Most coffee machines possess filling means that include a pump for liquid, usually water, which pumps the liquid from a source of water that is cold or indeed heated through heating means, such as a heating resistor, a thermoblock or the like.

For allowing the user to interact with such machines, for providing operation instructions to the machine or obtaining feed-back therefrom, various systems have been disclosed in the art, for instance as mentioned in the following references: AT 410 377, CH 682 798, DE 44 29 353, DE 202 00 419, DE 20 2006 019 039, DE 2007 008 590, EP 1 448 084, EP 1 676 509, EP 1 707 088, EP 08 155 851.2, FR 2 624 844, GB 2 397 510, US 4,253,385, US 4,377,049, US 4,458,735, US 4,554,419, US 4,767,632, US 4,954,697, US 5,312,020, US 5,335,705, US 5,372,061, US 5,375,508, US 5,645,230, US 5,731,981, US 5,836,236, US 5, 927, 553, US 5,959,869, US 6,139,888, US 6, 182, 555, US 6,238,721, US 6,354,341, US 6,759,072, US 7,028,603, US 7,270,050, US 7,279,660, US 7,350,455, US 2007/0157820, US 2008/199580, WO 97/25634, WO 99/50172, WO 03/039309, WO 2004/030435, WO 2004/030438, WO 2006/063645, WO 2006/082064, WO 2006/090183, WO 2007/003062, WO 2007/003990, WO 2008/104751, WO 2008/138710 and WO 2008/138820.

In particular, EP 1 707 088 discloses an automatic coffee machine that has a user interface on the housing with a series of push-buttons that are connected to the machine's electronic control circuit, as well-known in the art. WO 03/039309 discloses a coffee machine with a capsule magazine having a user interface with a series of push-buttons for selecting the type of coffee capsule to be loaded into the machine's brewing unit. WO 2006/063645 discloses a coffee machine with a push-button for receiving an user input to for starting up a beverage dispensing cycle. US 7,279,660 discloses a coffee brewing kettle having and LED or LCD display for indicating a water temperature and/or (remaining) brewing time and a series of control push-buttons re-programmable by activating programming buttons.

US 7,350,455 discloses a coffee machine with a pre-selector interface having a slide control member for proportionally varying an assembly of different kinds of coffee to be brewed together. It is inter-alia mentioned that the slide control may be substituted by a rotary control member, a plurality of push buttons, an approach sensor and/or a touch screen. Such a rotary control member is illustrated in US 7,028,603. This latter document discloses a coffee machine having a series of buttons for dispensing hot water, cold water or coffee, a potentiometer button rotatable on the surface of the housing to adjust the coffee concentration and a toggle switch to bypass the potentiometer for priming and flushing the machine.

Similarly, US 5,927,553 discloses a beverage machine having a toggle switch associated with a by-pass solenoid valve of the water circuit for by-passing the machine's heater and dispense un-heated water. WO 2006/082064 and WO 2008/138820 disclose similar arrangements of valves controlled by a toggle-switch.

In US 4,253,385 a coffee machine has a toggle switch that has a rest position, a first active position for powering the machine's heater and a second active position for powering a pump so as to pump water through the heater to a distribution block.

A coffee machine with conventional push-buttons and rotary control members is also disclosed in US 7,270,050. The push-buttons are associated with control LEDs. The rotary control members are used to select the brewing/steam process and to set the grind fineness for the coffee grinding. The coffee machine has a pair of push-buttons for selecting either a one-cup or a two-cup quantity of beverage to be dispensed.

Such push-buttons for selecting a quantity of beverage or cup size a wide spread in the art.

However, a drawback lies in the fact that it is necessary to provide a series of relatively expensive interface buttons depending on the number of different selectable volumes to be delivered. For example, in a conventional coffee machine, a "ristretto" button is required for extra-short coffees (25 mL), an "espresso" button for short coffees (40 mL) and a "long" button for long coffees (110 mL).

Moreover, this multiplication of buttons involves a real risk of confusion by the user unaccustomed to using the machine; this typically leads to the delivery of excessively strong coffees or to overspills from the cup. Another drawback arises from the lack of flexibility in respect of the user who may want an intermediate volume depending on the type of capsule or drink chosen.

In addition, such machines are usually sold with a factory setting of such buttons which may be reprogrammed by the user. Various systems may be used to reprogram the buttons, typically by manually activating and deactivating the dispensing process when the machine is in a reprogramming mode. However, it has been found that the switching into a reprogramming mode, even though unambiguously explained in corresponding user-manuals, is often done involuntarily by some users. They thus find themselves unconsciously reprogramming such buttons with random settings, generally leading to undesired results. As such users do not realise that they actually reprogrammed the machine and spontaneously assimilate the new settings as a malfunction of the machine which merely imagined malfunction has then to be handled by service personnel. This leads to unnecessary additional maintenance costs.

Despite a general trend in the industry to provide always more sophisticated beverage and liquid food machines allowing various user-parameterisation and user-configurations via control and parameterisation panels, sometimes even with the aid of remote computers and internet servers, there are still many people who would actually be quite happy with a fool-proof machine that is simple to use and does not require special skills in engineering and/or extensive and lengthy studying of complex user-manuals to prepare e.g. a simple espresso.

### Summary of the Invention

It is therefore a preferred object of the present invention to provide a liquid food or beverage preparation machine with an increased operational simplicity, improved ergonomics, intuitive and user-friendly handling for the users.

Another object of the invention is to reduce the manufacturing costs of a liquid food or beverage machine, in particular the costs of the machine's user-interface.

The invention thus relates to a machine for preparing a liquid food or beverage, in particular from a pre-portioned beverage or food ingredient.

For instance, the machine is a coffee, tea or soup machine, in particular a machine for supplying a beverage or liquid food by passing hot or cold water or another liquid through a capsule or pod containing an ingredient of the beverage or liquid food to be supplied, such as ground coffee or tea or chocolate or cacao or milk powder.

The liquid food or beverage machine has: a user-interface comprising a toggle-switch with a user-movable toggle switch member; and a control unit arranged for carrying out one or more operational processes of such machine. The control unit is arranged to store a plurality of values for a parameter of such an operational process. The user-interface is connected to the control unit and arranged to allow a user-selection of one value from this plurality of values for the control unit to carry out the corresponding operational process with such a selected value as the parameter of the operational process.

Typically, the control unit has at least one of a printed circuit board, a micro-controller and a memory chip. For instance, the memory chip is used to store the abovementioned various values.

In accordance with the invention, the toggle-switch member is movable into a plurality of distinct selection positions for selecting the values of the plurality of values, each value of the plurality of values being associated with a corresponding distinct selection position of the toggle-switch member.

Unlike most liquid food or beverage machine that use a plurality of buttons for selecting a parameter, in particular in combination with a sophisticated control display having one or more menu screens and possibly submenu screens, the use of a toggle-switch for letting the user select between a plurality of values suitable for a process parameter, for example selecting between a small cup, a medium cup and a large cup of beverage or liquid food, solves various prior art problems of such machines. Not only does such a toggle-switch reduce significantly the cost for providing such interface functions, i.e. a plurality of buttons may be replaced by a single low-cost toggle-switch having a corresponding number of selection positions, but increases also the user-friendliness of the user-interface, since all the values available to the user for a specific parameter of an operation process are associated with the same switch, so that the user does not have to wonder which button or switch to hit within which menu or mode of operation.

In one embodiment, the toggle-switch member has a rest position or state from which it is movable along a selection path into the selection positions. Such a rest position can be: an intermediate position on the selection path between or among said plurality of selection positions; or at an extremity of the selection path with the selection positions spaced therefrom along the selection path.

The selection positions may be associated with a user-sensitive means for providing a sensitive confirmation to the user of a selection of a particular value of said plurality of values. For example, the user sensitive means comprise at least one of: a means to provide at least one of a visual signal, such as a light emitting means, in particular light emitting diodes (LED), each selection position being in particular adjacent to a dedicated light emitting means; a means to generate an audible signal, in particular comprising a loudspeaker; a means to generate a touch signal such as "hard points" for retaining the toggle-switch member and indicating when at the selection positions; and a geometrical discriminator means, such as dedicated engaging locations arranged to receive the toggle-switch member diverted by a user from a selection path into such locations. Hence, when the user has properly reached with the toggle-switch member the selection position corresponding to the desired value, the machine can provide him a confirmation feed-back, e.g. in the form of a light signal, so that the user can confidently let go the toggle member, knowing that his wish has been regularly registered by the machine.

Typically, the toggle-switch member is associated with an automatic return mechanism, such as a spring-based mechanism, for an automatic return of the toggle-switch member from a selection position to the rest position or a default position. For example, when the toggle-switch member reaches a position corresponding to the desired value, a corresponding confirmation signal is emitted by the liquid food or beverage machine and the user thus knows that he can let go the toggle-switch member that will return automatically to the rest position confirming the selection of the corresponding value for carrying out the corresponding process.

A spring-based automatic return mechanism for a toggle-switch is disclosed in greater details in WO 2008/138820, the content of which is hereby incorporated by way of reference.

In one embodiment, the toggle-switch member is arranged to remain in the selection position until the process for which the corresponding parameter has been selected is carried out and completed, and only then the toggle-switch member returns automatically to the rest position. For example, if the toggle-switch is arranged to let the user select between a plurality of cup sizes, moving the switch member into a selection position will trigger the process of preparing a beverage or liquid food in the corresponding amount and after this amount is entirely dispensed by the machine, the toggle-switch will be allowed to return into the rest position.

Such a feature provides a confirmation feed-back to the user that the process with the selected parameter is regularly completed and also discourages a user from performing ambiguous actions such as selecting a new parameter during an ongoing execution of the process, raising the question whether the user actually wishes to change the current selection or enter an early selection for a subsequent process.

In another embodiment it is also possible to provide a toggle-switch member that is entirely manual, i.e. without an automatic return mechanism.

The toggle-switch can have a number of such selection positions. For instance this number is in the range of 2 to 8, in particular 2, 3, 4, 5 or 6. The different selection positions may be aligned in the toggle-switch. Alternatively, especially when there are more than two selection positions, the selection positions may be in a star configuration, for instance with a rest position in a central part of the star configuration. In the latter case, the toggle-switch member may be moved generally like a joystick along the different branches of the star configuration.

Typically, the values selectable by the toggle-switch correspond to: a parameter of a preparation process of such a beverage or liquid food, such as a heating temperature, concentration or amount of beverage or liquid food to be prepared; and/or a parameter of an automatic shut-down process of such a machine, in particular a duration of a timer-based automatic shut-down process.

For instance, when the machine is arranged to prepare a beverage or liquid food from a proportioned ingredient thereof, typically coffee or tea or chocolate contained in capsules or pods, the user only has to indicate the volume of liquid, usually hot or cold water, he wishes to be combined with the proportioned ingredient. This is going to determine the volume and concentration of the prepared beverage or liquid food. All the possible cup sizes that can be filled with the machine, e.g. espresso cup, regular cup or mug, can be presented on the same toggle-switch. This reduces the user's potential confusion or hesitation as to which virtual (e.g. on a touch screen) or physical button to hit so that the machine prepares the amount of beverage or liquid food he actually wishes.

In a slightly more sophisticated machine, the abovementioned values selectable via the toggle-switch are pre-settable by a user, in particular via the toggle switch.

In order to avoid any confusion about the mode of the machine, the pre-setting mode or value programming mode is preferably entered and left by a clear and unambiguous operation by the user. Hence unwanted random reprogramming can be prevent by avoiding that users find themselves unknowingly caught in the reprogramming mode while they are simply intending to make themselves a beverage or liquid food, like in prior art machine in which reprogramming results from simply pushing one of a plurality of dispensing button for an extended period of time. Moreover, since users who accidentally reprogram their machine without realising this, tend to associate the resulting reprogrammed operation processes with a malfunction of the machines and return such machines for repairing, numerous returns of machine that merely appear to be malfunctioning but are actually simply reprogrammed can be easily avoided.

Therefore, the interface may further comprise a selector, such as a selector wheel or a further toggle switch, for entering a pre-setting mode in which one or more values of said plurality of values are user-settable or user-changeable. This selector can include a user-rotatable selection wheel, in particular a selection wheel that has a position corresponding to a setting mode of the above values and optionally a plurality of further positions for selection of a value for at least a further parameter of another operational process.

For example, on the one hand, the toggle-switch may be configured to allow a choice among various predefined cup sizes for the beverage or liquid food preparation process. On the other hand, the selector can be arranged, in a setting position for example associated with a sensitive warning means, e.g. a light or sound signal and/or a "hard point" that has to be overcome to bring the selector in the setting position, to enter the pre-setting mode of the different cup sizes. The same selector, in other positions, can be used to set the duration for an automatic shut-off timer of the machine.

The interface may have at least one user-movable selector member, such as a selector wheel and/or a lever of a toggle switch, the control unit being enclosed in a compartment, in particular a sealed-off compartment such as a compartment impervious against dust and/or humidity, the user-movable selector member and the control unit being connected together through a wall of the compartment via a contactless or wireless communication means, in particular a magnetic or an electromagnetic communication means such as a means including a magnetic element and a Hall sensor.

In a particular embodiment of the invention, the machine is arranged for preparing the liquid food or beverage from a pre-portioned ingredient thereof, such as capsules or pods of the ingredient. The toggle-switch is arranged for allowing a user-selection between a plurality of preset quantities of liquid food or beverage to be prepared from this pre-portioned ingredient within a particular liquid food or beverage preparation batch. The toggle-switch is in particular arranged for allowing a user-selection between a plurality of preset quantities of water to be combined with said pre-portioned ingredient for preparing said liquid food or beverage.

Another aspect of the invention relates to a machine for preparing a liquid food or beverage, in particular as described above. The machine has an outermost housing with a face bearing a user-interface that comprises a selector wheel which is user-rotatable for selecting at least one value for a parameter of a process to be carried out by such machine. In accordance with the invention, the selector wheel has a generally circular peripheral portion that is rotatable through the housing face, the selector wheel having a axis of rotation that is optionally located inside the housing, the selector wheel being in particular generally perpendicular to the housing face.

Hence, in contrast to prior art beverage and liquid food machines for instance as disclosed in the abovementioned US 7,270,050, which have selector wheels (or turn buttons or knobs) arranged to rotate with the entire wheel on the surface of the machine's housing about an axis that is generally perpendicular to the housing, only a limited angular sector the selector wheel is apparent on the housing of the machine, thus reducing the required space of the user-interface on the machine's housing.

The rotatable wheel can be arranged to allow a user-selection of values within at least one discrete or continuous range or values. This range of values may correspond to a range of quantities of liquid food or beverage to be prepared within a preparation batch or to a range of durations of a timer-based automatic shut down process.

The timer-based automatic shut down process may be arranged to shut down the machine: partly, for example into a low current consumption standby modus in which e.g. only the electronic circuit is powered for waiting a user reactivation instruction and initiate reactivation of the machine; or fully by disconnecting all current consuming components of the machine from the machine's power source, e.g. the mains. The timer-based automatic shut down process is typically arranged to shut down the machine after a duration during which the machine is not operated by a user, such duration being selectable by a user as explained above.

The rotatable selector wheel may incorporate a push-button mechanism for allowing a further user-selection or a confirmation of a previous user-selection by pushing the selector wheel, in particular in a direction generally radial or axial to the wheel.

This machine with the selector wheel may incorporate any feature described above or combination of such features, in particular the above described toggle-switch.

A further aspect of the invention relates to a machine for preparing a liquid food or beverage, in particular as described above. The machine has: a user-interface that comprises at least one user-movable selector member, such as a selector wheel and/or a lever of a toggle switch; and a control unit arranged for carrying out one or more operational processes of such machine, the user-interface being connected to the control unit. In accordance with the invention, the control unit is enclosed in a compartment, in particular a sealed-off compartment such as compartment impervious against dust and/or humidity. The user-movable selector member and the control unit are connected together through a wall of the compartment via a contactless or wireless communication means, in particular a magnetic or an electromagnetic communication means such as a means including a magnetic element and a Hall sensor. In particular, the magnetic element is movable with the user-movable selector members outside the compartment and the Hall sensor is connected to the control unit inside the compartment and arranged to detect a position and/or movements of the magnetic element.

The sealed-off compartment may in particular protect the control unit, in particular a PCB, against a liquid of vapour emissions from a fluid circulation arrangement of the machine.

This machine may incorporate any feature described above or combination of such features.

### Brief Description of the Drawings

The invention will now be described with reference to the schematic drawings, wherein:
- Figures 1 and 3 illustrate beverage or liquid food machines that can be fitted with an interface according to the invention;
- Figure 2 shows an interface of a beverage or liquid food machine as illustrated in Figure 1;
- Figure 4 is an exploded view of an interface of a beverage or liquid food machine according to the invention;
- Figures 5a to 5c show the different positions that may take a toggle-switch illustrated in Figs 2 and 4; and
- Figures 6 to 9 illustrate further toggle-switches of beverage or liquid food machines according to the invention.

### Detailed description

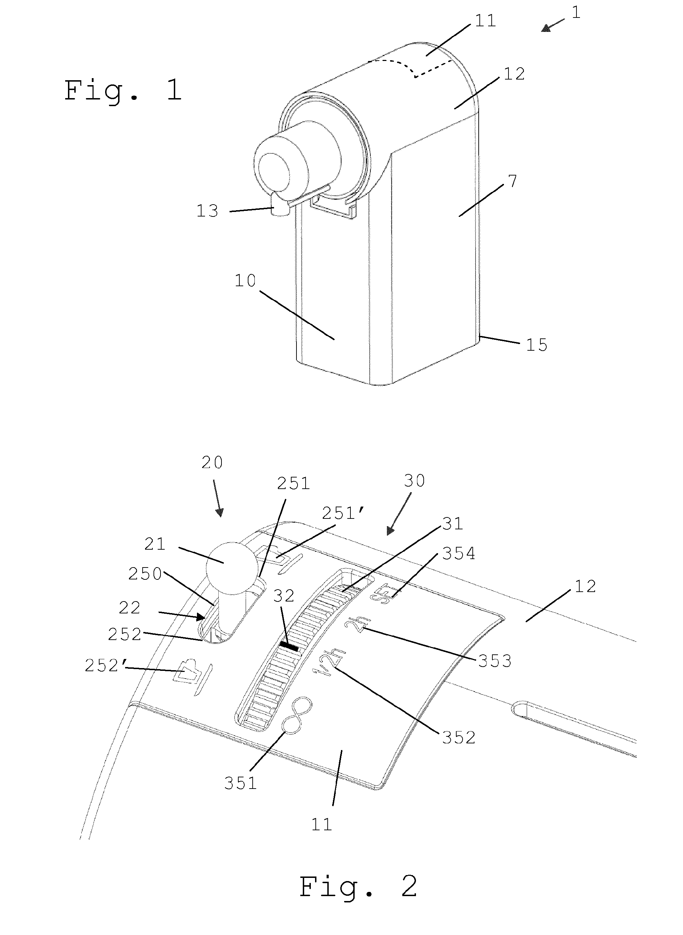

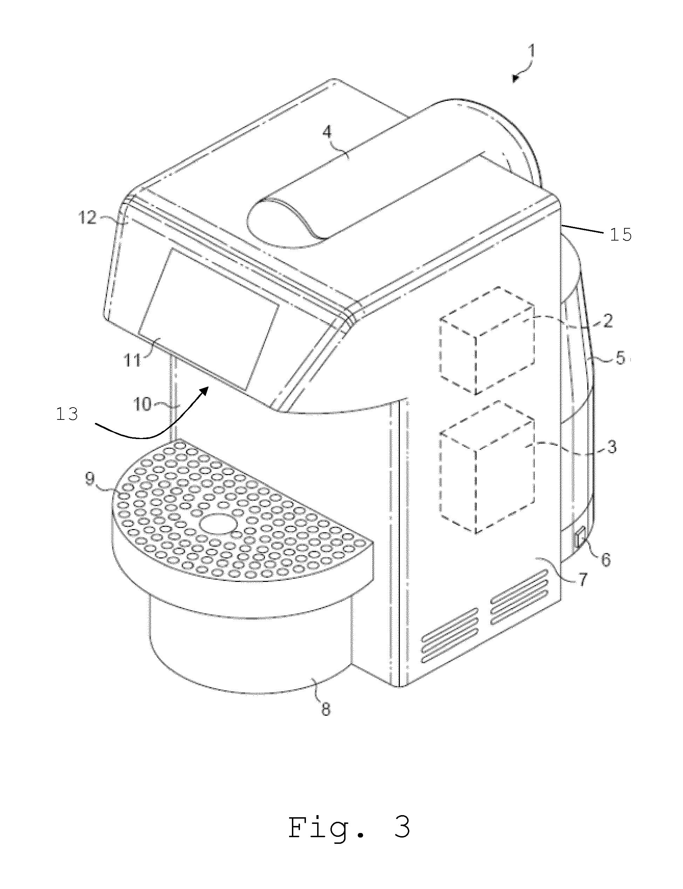

Figures 1 and 3, in which the same numeric references designate generally the same elements, illustrate two different beverage or liquid food machines 1, in particular coffee machines. Machines 1 are arranged to dispense coffee from pre-proportioned ground coffee batches, for instance supplied within packages, typically capsules or pods, into a brewing unit of machines 1 for extraction by passing heated water therethrough, as known in the art and for instance disclosed in EP 1 646 305.

Machine 1 has a housing 15 with various faces 7, 10, 12. As schematically illustrated in Fig. 3, housing 15 contains a heater module 2 and a pump module 3 for pumping and heating water from a tank 5 connected to the machine's housing. Machine 1 further has a handle 4 pivotable about a rear part of the machine and arranged for opening and closing a brewing unit (not shown) located thereunder, and covering and uncovering access to the brewing unit. The heated water is guided via pump 3 and heater 2 to the brewing chamber containing an ingredient of the beverage, e.g. ground coffee such as pre-portioned ground coffee in a capsule or pod, and thus prepared beverage is dispensed via an outlet 13 (shown in Fig. 1) to a cup positioned underneath. As shown in Fig. 3, machine 1 may further be fitted with a drip tray 8 covered by a support grid 9 on which a cup (not shown) may be placed to be filled with a beverage prepared by machine 1.

Moreover, machine 1 includes within its housing a control unit (not shown) for controlling heater module 2 and pump module 3. The control unit typically comprises a printed circuit board, a micro-controller, a memory chip, and electric connectors to the different electric components of machine 1, such as heater module 2, pump module 3, sensors, interface, LEDs, main switch 6 and other switches, etc... The control unit is configured for carrying out one or more operational processes of machine 1, in particular the beverage preparation process as well as for example automatic shut down processes, self-cleaning processes, interface communication processes etc... Moreover, the control unit is arranged to store a plurality of values for a parameter of such an operational process, such as the quantity of beverage to be prepared.

The control unit is connected to a user interface 11 on upper face 12 of the machine's housing so as to be easily accessible by a user. User-interface 11 is arranged to allow a user-selection of one value from this stored plurality of values so that the control unit can carry out the corresponding operational process with this one value as the process parameter.

Figure 2, in which the same numeric references generally designate the same elements, shows in greater details user-interface 11 of the beverage machine of Fig. 1. User interface 11 has a face that is arched to match the rear part of the arched upper face 12 of machine 1. (In contrast, interface 11 of machine 1 shown in Fig. 3 has of course a flat face to match the corresponding front inclined flat face 12 of machine 1.)

Interface 11 has a toggle-switch 20 for selecting a particular amount of beverage to be dispensed, i.e. the different values represent a small cup or a large cup to be prepared, next to a selector wheel 30 for choosing the duration of a timer for automatic shut-down of machine 1.

Toggle-switch 20 includes a user-movable toggle switch member in the form of a pivotable lever 21 that has a middle rest position 250, in which lever 21 is actually shown in Fig. 2, and may be pivoted along a selection path in the form of an elongated opening 22 in interface 11, between two extremities 251,252. Lever 21 extends through opening 22 and is associated with a spring-based automatic return mechanism (not shown) so that when a user moves lever 21 to an extremity 251,252 and then releases lever 21, the latter will automatically return to its rest position 250, each extremity corresponding to a selection position of toggle switch 20. Extremity 251 is associated with a symbol of a large cup 251'. Extremity 252 is associated with a symbol of a small cup 252'. Toggle-switch 20 and the control unit are so arranged that moving lever 21 to large cup 251' will lead to the execution of the beverage preparation process and beverage dispensing via outlet 13 with, as the process parameter, the value corresponding to a large cup of beverage dispensing. Likewise, if lever 21 is moved to small cup 252', the beverage preparation process will be carried out with the value for a small cup of beverage dispensing as the process parameter.

If machine 1 is arranged to prepare beverages from proportioned capsules or pods, these different values will simply represent the different quantity of liquid, e.g. water, to be pumped through the capsule or pod from the source of liquid. Then, upon combination with the ingredient contained in the capsule or pod, e.g. upon brewing, the liquid thus loaded with a beverage ingredient from the capsule or pod will be dispensed to a user as a large or small cup, depending on the selected position of lever 21 and corresponding value.

Moreover, when lever 21 is pivoted to reach either extremity 251,252, the corresponding sign 251',252' is lit on, e.g. by means of an LED associated therewith, so as to provide a visual feed-back to the user indicating that the selection of the corresponding value, i.e. the desired cup size, has been properly registered by machine 1. The control unit of machine 1 may be so configured as to allow the cancellation of the selection by moving lever 21 a second time to the previously selected cup size, or by moving lever 21 to a different cup size position whereby the previous selection is cancelled and a new selection is simultaneously made. The control unit of machine 1 may be configured to cancel automatically the selection of a value upon execution of the corresponding operation process or keep the selected value until it is manually cancelled or reprogrammed by the user. Machine 1 may be configured to allow user-programming of either mode or may be permanently factory set on one mode only.

Beverage preparation may begin after the user has actuated a dispensing button (not shown), or may automatically begin after having released lever 21. In either case, machine 1 may still be arranged, e.g. the control unit programmed correspondingly, to allow manual dispensing of a beverage by actuating the dispensing button for an extended period of time, or by holding lever 21 in a selection position for an extended period of time, which extended actuation or holding would in either case switch the beverage preparation mode from the automatic mode to a manual mode.

If the aim is to reduce the number of different user-configurations and likelihood of user-misconfigurations, it would be advisable to limit the number of options relating purely to the interface features (light and/or sound effects and the like) having no impact on the operational physical processes of machine 1, such as the beverage preparation process and automatic shut-down processes, and to pre-configure the interface features in such a manner as to be most user-friendly for the target consumer group, for example this large group of consumers who simply appreciate making themselves a well adjusted and tasty coffee without having to worry about all nice and fancy secondary possibilities that technology can offer.

Furthermore, in a variation, selector 20 may incorporate a push-button mechanism, in particular a radial push-button mechanism, for instance to switch on or off the machine.

Interface 11 also includes a selector 30 having a rotatable wheel 31. Such wheel 31 is arranged to rotate in a plane perpendicular to face 12 of housing so that only a peripheral part of wheel 31 is apparent on face 12 of the machine's housing 15. This reduces significantly the required apparent space for such a rotatable switch compared to rotatable switches or knobs known in the art, as for instance disclosed in US 7,270,050.

Wheel 31 has a positioning mark 32 and is rotatable to bring mark 32 face-to-face with a selection position indicated on interface 11 by a series of signs 351,352, 353,354 so as to allow a user-selection of the corresponding value or function by turning wheel 31 into the corresponding position. As illustrated in Fig. 2, selector wheel 30 serves to set the duration for a timer for an automatic shut-off process of machine 1. In this example, the user may choose between disabling the timer, i.e. mark 32 brought in front of the infinite sign "∞", and choosing a period of time of 0.5 or 2 hours for the timer as indicated by the corresponding signs "½ h" and "2 h". The selection of period of time may involve a choice between discrete number of values, as in the present case where the user can choose 0.5 or 2 hours, or the selection may involve a choice of a value within a continuous range of values, e.g. between ¼and 3 hours.

Moreover, wheel 31 can be rotated so that mark 32 faces sign "SET" 354. In this position, the control module will enter a user-reprogramming mode in which he will be allowed to change the values assigned to the selection positions 251,252 of toggle-switch 20. For instance, in the user-reprogramming mode, the user will have to start and stop the dispensing process manually so that the control module may acquire the value corresponding to the newly set quantity of beverage assigned to a particular selection position 251,252 of switch 20. For example, in the reprogramming mode, when mark 32 faces sign "SET" 354, the user will bring lever 21 to the selection position 251,252 whose corresponding value he wants to redefine. This will light up the corresponding sign 251',252' indicating proper selection, allow the return of lever 21 to its rest position 250 upon release of lever 21, and initiate the beverage preparation process. When an amount of beverage has been dispensed by machine 1 that satisfies the user, he will re-operate lever 21 to indicate to the control unit that the new value that has to be assigned to this selection position corresponds to the dispensed amount of beverage. When this reprogramming operation is over, the user will move wheel 31 with mark 32 away from sign 354 to re-enter the normal operation mode of machine 1. In a variation of the reprogramming process, the user may have to hold lever 21 in the corresponding selection position 251,252 for the duration necessary to deliver the desired amount of beverage and then let go lever 21 into its rest position, whereby dispensing is stopped and the corresponding new value of the process parameter acquired by the control unit of machine 1.

In order to prevent any unwanted reprogramming of machine 1, the entry into the reprogramming mode should be clearly indicated to the user by an appropriate feed-back, preferably a special feed back so that the user will not be allowed to believe that machine 1 operates as usual. For instance, the selection position 354 associated with the reprogramming mode will have a dedicated visual light effect that cannot be mistaken with the remaining visual effects, in particular different colours associated with intermittent or continuous lightening to maximise the visual contrast effect. For example, whereas the remaining signs 251',252',351,352,353 of interface 11 may be highlighted by a white or green continuous light as long as the corresponding value or function is selected, the "SET" selection position can be associated with a flashing red light and even with a sound signal. In such a manner, a user that would inadvertently select the reprogramming function would not be left in the belief that machine 1 is operating as usual but his attention would be attracted to the fact that something special has happened in connection with the "SET" sign.

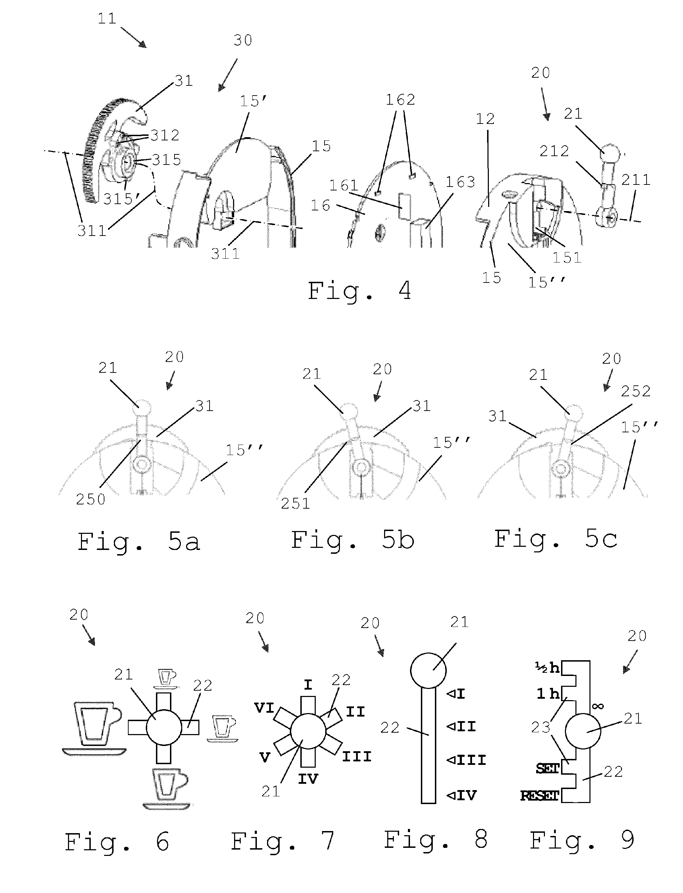

Figure 4 is an exploded view of interface 11 partly shown in Figure 2.

Toggle 20 and selector 30 are associated with a printed circuit board (PCB) 16 of the control unit. PCB 16 is mounted in a compartment formed of two generally upright inner shells 15',15" of housing 15 and positioned therein by means of a positioning element 161. PCB 16 bears various electric and electronic components, such as Hall sensors 162 and other sensors, e.g. temperature sensors and a flow meter, a controller 163, a memory chip, power management arrangement, electric and electronic connectors, etc... A control unit in a compartment in a similar configuration, leaving aside the user-interface and its connection, is disclosed in EP 08 156 704, the content of which is hereby incorporated by way of reference.

Lever 21 is pivotally mounted on the outer side of inner shell 15" around pivoting axis 211 and cooperates with a resilient spring blade 151 mounted on shell 15" for the automatic return of lever 21 into its intermediate rest position upon pivoting, as discussed above.

Furthermore, lever 21 bears a magnetic component 212 that is arranged to be pivoted with lever 21 adjacent Hall sensors 162 on PCB 16 for allowing a contactless detection by PCB 16 of the presence of lever 21 in a selection position 251,252.

Wheel 31 of selector 30 is pivotally mounted via bearing part 315 on upright wall 15' about pivoting axis 311. Wheel 31 bears a pair of side-by-side magnetic elements 312 that are pivotable with wheel 31 and that cooperate with corresponding hall sensors (not shown) on PCB 16 to detect the angular position of wheel 31. Moreover, bearing part 315 has at its periphery a protrusion 315' that cooperates with a series of spaced apart resilient arrangements (not shown) on shell 15' to provide a "hard point" associated with each selection position 351,352,353,354 of selector 30.

Since lever 21 and wheel 31 are mounted on the outside of compartment 15',15" without having any movable part extending into compartment 15',15" , the detection by control of the position of lever 21 and wheel 31 being contactless and achieved by means of external magnets 212,312 cooperating with inner hall sensors 162, compartment 15',15" containing PCB 16 can be sealed off from the remaining parts of machine 1, in particular to avoid exposure of the control unit to humidity generated by the liquid and/or steam circulation system within machine 1 and/or other undesirable substances for the control unit.

Figs. 5a, 5b and 5c, in which the same numeric references designate the same elements, show toggle switch 20 with its lever 21 in its rest position 250, in the "large cup" selection position 251 and in the "small cup" selection position 252, respectively.

Figures 6 to 9, in which the same numeric references designate generally the same elements, illustrate further embodiments of a toggle-switch 20 of a beverage or liquid food machine in accordance with the invention. Each toggle-switch 20 of Figs. 6 to 9 is shown with its lever 21 in the rest position.

Lever 21 shown in Figs 6 and 7 are movable in two directions. Such a lever 21 may be generally arranged within toggle-switch 20 like a joystick stick in a computer joystick.

Fig. 6 shows a toggle-switch 20 with a selection path in the form of an opening 22 having generally the shape of a Swiss-cross along which lever 21 may be moved to allow the user to select a predetermined cup size among an espresso cup size, a medium cup size, a large cup size and a mug size, as indicated by corresponding receptacle pictograms adjacent the extremities of the branches.

Fig. 7 shows a toggle-switch 20 with a selection path in the form of an opening 22 having generally the shape of a star with six branches through which lever 21 extends. A user may move lever 21 along these branches to select a predetermined cup size among six different cup sizes indicated by roman numeric signs I, II, III, IV, V and VI associated with the extremities of the star's branches. These extremities correspond to six different selection positions of the toggle-switch. The beverage or liquid food machine may be programmed to associate a different value of a parameter of an operational process, e.g. the amount of beverage or liquid food to be prepared and dispensed, with each selection position. For instance, when a machine is used by several different users, for example by a family or in a small office, each user may program the machine with his or her own preferences, which he will then be able to recall whenever he uses the machine by moving lever 21 to his dedicated selection position.

Fig. 8 shows a toggle-switch 20 with a selection path in the form of an opening 22 having the shape of a straight line. Lever 21 is in its rest position at one extremity of the selection path 22, the selection positions, indicated at the side of the selection path by roman numeric signs I, II, III and IV in combination with a triangular arrow, are located after the rest position at spaced apart locations along the selection path up to the other extremity. In order to mark the proper positioning of lever 21 adjacent a selection position, each selection position is associated with a "hard point" so that the passage of a selection position is mechanically indicated to the user pushing lever 21 along path 22. Moreover, when a particular value is selected, e.g. identified by the farthest selection position that was reached by lever 21 before the automatic return of lever 21 into its rest position, the corresponding roman sign may be highlighted, for instance with a LED associated therewith.

Fig. 9 shows a toggle-switch 20 with a selection path in the form of an opening 22 having the shape of a straight line giving into four engaging side locations 23 serving as selection positions. Lever 21, which is generally movable like a gearstick, may be diverted from the main path 22 into these engaging locations 23 to select a particular value or function. In this case, the toggle-switch, like the above selector wheel, serves to select a time period among two predetermined durations, i.e. 0.5 hour or 1 hour, for a timer-based automatic shutdown process, or to enter a programming mode as indicated by the sign "SET", or to reset the user-defined values to the default factory-preset values as indicated by the sign "RESET". The rest position of toggle 21, which actually makes up the entire main path 22 with the exception of the engaging locations 23, corresponds to disabling the timer-based automatic shutdown process (without selecting another function), as indicated by the infinite sign "∞". Unlike the previously illustrated toggle-switches, toggle switch 20 shown in Fig. 9 is not provided with an automatic return mechanism to move lever 21 out from the selection positions back into the rest position, which in this case is done manually by the user. However, in a variation, it is also possible to provide such an automatic return mechanism for such a lever 21.

## Claims

1. A machine (1) for preparing a liquid food or beverage, having an outermost housing (15) with a face (12) bearing a user-interface (11) that comprises a selector wheel (31) which is user-rotatable for selecting at least one value for a parameter of a process to be carried out by such machine (1), wherein the selector wheel (31) has a generally circular peripheral portion that is rotatable through the housing face (12), the selector wheel (31) having an axis of rotation that is optionally located inside the housing (15), the selector wheel (31) being in particular generally perpendicular to the housing face (12).

2. The machine of claim 1, wherein the rotatable wheel (31) is arranged to allow a user-selection of values within at least one discrete or continuous range or values, said range of values corresponding in particular to a range of quantities of liquid food or beverage to be prepared within a preparation batch or to a range of durations of a timer-based automatic shut down process for automatically shutting down the process after non-operation by a user of such machine during the selected duration.

3. The machine of claim 1 or 2, wherein the rotatable selector wheel incorporates a push-button mechanism for allowing a further user-selection or a confirmation of a previous user-selection by pushing the selector wheel, in particular in a direction generally radial or axial of said wheel.

4. A machine (1) for preparing a liquid food or beverage, in particular as defined in any preceding claim, having:
- a user-interface (11) that comprises at least one user-movable selector member, such as a selector wheel (31); and
- a control unit (16,161,162,163) arranged for carrying out one or more operational processes of such machine (1), the user-interface (11) being connected to the control unit (16),
**characterised in that** the control unit (16,161,162,163) is enclosed in a compartment (15',15"), in particular a sealed-off compartment such as compartment impervious against dust and/or humidity, the user-movable selector member (21,31) and the control unit (16, 161, 162, 163) being connected together through a wall (15'15") of the compartment via a contactless or wireless communication means, in particular a magnetic or an electromagnetic communication means such as a means including a magnetic element (212,312) and a Hall sensor (162).
